# EUROPEAN PATENT APPLICATION

(11) **EP 3 306 987 A1**
(43) Date of publication of application: **11.04.2018**
(21) Application number: 16306313.4
(22) Date of filing: 05.10.2016
(51) Int. Cl.: H04W 48/18

(54) **METHOD AND SYSTEM FOR INSTANTIATING A LOGICAL NETWORK SLICE FOR USE WITH AN OPERATOR-MAINTAINED NETWORK PORTION**

(71) Applicant: ALCATEL LUCENT, 92100 Boulogne-Billancourt (FR)
(72) Inventor: ALBERI-MOREL, Marie Line, 91620 Nozay (FR); KERBOEUF, Sylviane, 91620 Nozay (FR); FAUCHEUX, Frederic, 91620 Nozay (FR); ORLANDI, Barbara, 91620 Nozay (FR); LAFRAGETTE, Jean-Luc, 91620 Nozay (FR)
(74) Representative: Bryers LLP

(57) **Abstract**

A method for instantiating a logical network slice for use with an operator-maintained network portion, the method comprising generating a graph of non-operator resources, generating a set of multiple resource topologies representing respective network slices using at least the non-operator resources, respective topologies including selected non-operator resources suitable for executing a pre-characterised service by a preselected set of parameters, receiving a request for a service, selecting a resource topology from the set for the requested service and instantiating the requested service using a network slice.

## Description

### TECHNICAL FIELD

Aspects relate, in general, to a method and system for instantiating a logical network slice for use with an operator-maintained network portion.

### BACKGROUND

Network slicing is a concept for 5G (and beyond) telecommunications networks that is gaining momentum. Broadly speaking, the concept involves abstracting a network into logical slices to meet the specific demands of various use cases, thereby providing connectivity services defined by a number of customizable software-defined functions that govern geographical coverage area, duration, capacity, speed, latency, robustness, security and availability for example.

Typically software-defined networking (SDN) and Network Functions Virtualization (NFV) can provide the tools to enable systems to be generated with a greater degree of abstraction so as to allow network slicing to be effected. Thus, operators can provide networks on an as-a-service basis in order to provide the flexibility needed to allocate and reallocate resources in line with demand, and to tailor network slices to specific needs.

### SUMMARY

According to an example, there is provided a method for instantiating a logical network slice for use with an operator-maintained network portion, the method comprising generating a graph of non-operator resources, generating a set of multiple resource topologies representing respective network slices using at least the non-operator resources, respective topologies including selected non-operator resources suitable for executing a pre-characterised service characterised by a preselected set of parameters, receiving a request for a service, selecting a resource topology from the set for the requested service and instantiating the requested service using a network slice. The method can further comprise determining or otherwise providing the capabilities and connectivity parameters of respective ones of the non-operator resources and normalising the capabilities and connectivity parameters of respective ones of the non-operator resources. The method can further comprise determining a measure of performance between respective ones of the non-operator resources. The method can further comprise defining or providing a set of logical network slice templates, respective ones of the templates mapping to a pre-characterised service.

The method can further comprise mapping a request for a service to a pre-characterised service by determining a set of one or more parameters characterising the request and mapping those determined one or more parameters to the preselected set of parameters. The method can further comprise generating a map of non-operator resources and updating the map to reflect the addition or removal of one or more non-operator resources.

According to an example, there is provided a system for instantiating a logical network slice for use with an operator-maintained network portion, the system comprising a resource sharing registry entity to receive data representing operator brokered resources, an edge resource topology database to generate a set of multiple resource topologies using at least the non-operator resources, respective topologies including selected non-operator resources suitable for executing a pre-characterised service characterised by a preselected set of parameters, the system operable to receive a request for a service, select a resource topology representing a network slice from the set for the requested service and instantiate the network slice using a network slice orchestration entity. The resource sharing registry entity can determine or otherwise receive data representing the capabilities and connectivity parameters of respective ones of the non-operator resources and normalise the capabilities and connectivity parameters of respective ones of the non-operator resources. The system can determine a measure of performance between respective ones of the non-operator resources. The system can map a request for a service to a pre-characterised service by determining a set of one or more parameters characterising the request and mapping those determined one or more parameters to the preselected set of parameters. The system can generate a map or graph of non-operator resources and update the map to reflect the addition or removal of one or more non-operator resources.

According to an example, there is provided computer program product, comprising a computer usable medium having computer readable program code embodied therein, said computer readable program code adapted to be executed to implement a method to instantiating a logical network slice for use with an operator-maintained network portion as provided herein. The product can further include program code embodied thereon to be executed to determine the capabilities and connectivity parameters of respective ones of the non-operator resources and normalise the capabilities and connectivity parameters of respective ones of the non-operator resources. The product can further include program code embodied thereon to determine a measure of performance between respective ones of the non-operator resources. The product can further include program code embodied thereon to be executed to map a request for a network slice to a pre-characterised service by determining a set of one or more parameters characterising the request and mapping those determined one or more parameters to the preselected set of parameters.

### BRIEF DESCRIPTION OF THE DRAWINGS

Embodiments will now be described, by way of example only, with reference to the accompanying drawings, in which:
Figure 1 is a schematic representation of a system according to an example;
Figure 2 is a flow chart of a method according to an example;
Figure 3 is a schematic representation of network slice templates according to an example;
Figure 4 is a schematic representation of network slice templates and their related KPI parameters according to an example;
Figure 5 is a schematic representation of a physical network topology according to an example;
Figure 6 is a schematic representation of an abstraction of a network topology according to an example;
Figure 7 is a schematic representation of an abstraction of a physical network topology showing two filtered examples in a given localisation area according to an example;
Figure 8 is a schematic representation of a network slice instantiation for a video caching service in a given area according to an example;

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

A network slice is a self-contained logical network customized to fulfil the requirements of a service level agreement (SLA) from a tenant or customer. Typically, the tenant is a third party who wants to use the network slice to provide its own business service/application that is directed toward its own customers. Generally speaking, a tenant can be an over the top (OTT) service provider or a vertical customer of the network operator for example.

Examples of services that may be requested and which may be provided using network slicing are coverage of an area with internet connectivity access, deployment of a content delivery network (CDN) service for a video service, a smart meter or sensor utility service and so on. In each of these examples (which are not exhaustive), the services have different network requirements.

In an example, a network slice instance can be composed of a collection of virtualized network and service function (or micro service) instances (along with related management/control function instances) and the infrastructure resources that are used to operate the self-contained logical mobile network.

The selection, configuration and orchestration of the collection of virtualized functions can be handled on the basis of the requirements of the SLA with the tenant. Amongst other things, it can include the placement of virtualized network and service functions and the allocation of required resources. Typically these resources can be both:
- virtualized resources such as computing power, virtualized memory and storage, and virtualized networking capacity to be allocated to virtual network functions;
- physical resources on specialized hardware. Those are strongly coupled with hosted physical network functions (e.g. RRH).

The resources can come from the virtual and physical network infrastructure belonging to the operator who may itself lease some virtual resource from a datacentre/cloud provider for example.

Generally speaking, more and more network functions, services and applications are moving to the network edge (the network edge consists, broadly, of those devices which provide an entry point into the network core, which is the central part of the network). Network edge devices and access points, which may have significant capabilities in term of computing, memory, storage and connectivity and so on, are generally becoming 'smarter', while the trend is to make network core devices 'dumb and fast'. However, there are significant numbers of edge devices that are not operator owned and which may not therefore be used in the way noted above.

According to an example, a system and method is provided for the creation, on demand, of network slices using network edge resources, that is access points and devices that are not part of the network operator domain (nor any data centre domain). In an example, non-operator resources are edge resources that are not part of an operator network wireless access infrastructure but are instead composed of licensed and unlicensed resources that can be metro, local and private, and future (to be deployed) resources. Edge resources designate, in particular, equipment that is away from the core of the network infrastructure, and closer to targeted user equipment. Thus, non-operator resources are not owned by the operator nor a data center and are resources that are declared as shareable with a third party. In an example, that 3^{rd} party will be the operator and the edge resources, also called community edge resources, are brokered by the operator. As a broker, the operator needs to do some works to use these resources. In an example, it can install a virtual environment and agents to use these shared resources and build a network topology of the resources. The installation can occur at the time of registration of the resource by the owner for example, or can be performed subsequent to this registration by uploading an agent to the device or pushing a link to an agent to be downloaded and installed on a device for example.

That is, there is provided a system and method for the creation of on-demand network slices for service providers using at least some edge resources which are not part of an operator network wireless access infrastructure. Operator owned or leased resources may also be used as part of the network slice. The edge resources can be a part of licensed and unlicensed access networks that can be metro, local and private access networks for example. The service providers in question can be OTT service providers. In an example, an edge portion or air interface portion of a network slice can comprise the non-operator resources, that is, the community edge resources that are brokered by the operator and which may be selected based on the service requested. The network slice proper, that is, the edge portion of the network slice along with a core network portion can also include the chain of network functions that are used to effect the slice (e.g.: LTE node + MME + SGW + PGW + IMS functions and so on). The core network portions of a network slice are not described in any more detail, as their function and relative disposition within a network are well known. However, the edge portion of a network slice is described herein with reference to the generation of a graph of edge resources and the selection of specific edge resources to form slices that are geared to execute specific services. Nevertheless, the multiple resource topologies noted herein can include virtualised network functions because a network slice is not only comprised of connectivity elements and nodes but also network functions or services (as defined in 3GPP for example) that enable the slice to function end-to-end.

Accordingly, a network slice can be dynamically generated from edge resources including resources that are not owned by the network operator or a data center provider but which are made available by individuals or organisations. The edge resources can be selected in order to provide the best match for the on-demand network slice. Thus, the range of resources to be considered by a network operator within a network slice can be extended by including resources that are owned by individuals or small entity/organizations who are willing to share them (as paid commodity for example) for inclusion in the operator's network - these can be termed edge community resources. Such resources are typically WiFi access points, Set-top boxes, Home or local GW, wireless hard-drive, smartphones, and so on. They are not organized or structured as resources in a data centre are. Indeed, the resources are owned by distinct owners without any relationship (different situation from a data centre where a single operator owns the resources and organizes them for Infrastructure as a service). The resources may also be available or removed by the owners without any recourse to the operator. Linking in to this, the temporal scale over which resource are available can therefore be very short. For example, it may be a few days, a few hours per day and so on. However, many thousands of resources can be shared by individuals/organization.

The network operator will use these resources as edge resources (as noted above, equipment away from the core of the core infrastructure, and closer to the targeted end user equipment). In an example, the network operator can use a community sharing platform in which resource owners can register and make their resources available for the network operator and/or for other end-users of the platform.

According to an example, exposition of edge resources can be automated, enabling creation, on demand, of a network slice including edge community resources, e.g. any access points or network element owned by individuals or small entities. A topology of edge resources can be built and resources that match certain criteria, depending on the nature of a desired network slice, can be selected to instantiate a logical network slice.

Broadly speaking, the following stages can be used in an example:
- a map or graph of edge connectivity and resources, including "edge community resources" can be built or generated;
- edge resource capabilities, including those of "edge community resources" are normalised or abstracted;
- a service request from a tenant can be mapped to a predefined network slice template;
- a logical network slice can be instantiated using selected edge resources based on a template.

Community edge resources do not belong to the operator's infrastructure domain (nor to any data centre organization). Thus, the network operator must identify those resources in order to characterize them with respect to some criteria and to enable installation an operator agent on the devices to enable download of a virtualization layer environment. In an example, a map or graph of edge resources is generated. One example of how such a map may be generated is using the above-noted community sharing platform. Users with available resources may be able to provide details of the resources that they are willing to share or otherwise provide for use with network slices. For example, a user may be able to set up and maintain a user account that provides a list of the resources they own and are willing to share, along with details of the resources, such as capabilities, access details and so on that enables the resources to be categorised and accessed as needed. Alternatively, or in combination, it is possible to populate a list of resources automatically by, for example, executing an agent to gather network topology information and determine network performance between nodes so as to extract and transform collected resource characteristics into abstracted capabilities with semantics adapted for further orchestration of those virtualized resources.

In an example, data representing each resource making up a resource topography can be provided to an Edge Slice Resource Selector (ESRS) entity. The ESRS can analyse a predefined network slice template to identify a set of available resources that can be used to build the network slice. The edge resources are selected according to the needs of each slice. The ESRS can provide data representing the selected resources and their network topology to an edge slice resource database ESRDB. An API can be initiated to give access to the ERSDB information to a network slice orchestrator. In an example, the API can expose different topologies and resource views depending on the type of network slice. When instantiating a slice upon request from a tenant, a network slice orchestrator can use the API to get the network topology and available resource for this type of slice and then allocate the resource to the slice.

Generally speaking, the present system and method is targeting resources including the air interface and so the geographical and coverage aspect is important (i.e. "edge" resources as opposed to renting processing and storage in a data centre for example). Of course, there are problems associated with this. For example, scalability - suddenly there is a move from tens of thousands operator macro-base stations to millions of access points. Also, the system must be future-proof and cover any non-operator-owned access. Today the main use case is Wi-Fi but WiGig accesses would be of interest too as well as future resources based on ultra-short-range communications (USRC) develop and are deployed/used..

Coverage today is typically defined geographically meaning current databases contain the geolocation of base stations. Here detailed GPS coordinates may not necessarily be known (indoors) and not that helpful if you think of a multi-storey building where an access located at the 7th floor for example will not provide coverage at the ground floor. What matters is relative coverage such as knowing the Wi-Fi access point from a small shop on the 3rd floor of a shopping mall is located under the coverage of a set of operator small cells and other 3rd-party Wi-Fi access points. Location could even be expressed in terms of Bluetooth beacons for example.

In order to deal with the above-noted issues, a graph-based database where the data model does not need to be predefined and the scalability is covered can be used. The coverage relationships can be expressed by links (and algorithms can be defined to deduce more coverage and neighbourhood relationships based on known relationships). This solution also enables seamless addition to the database of other types of links related to building a network topology based on the nodes in the database.

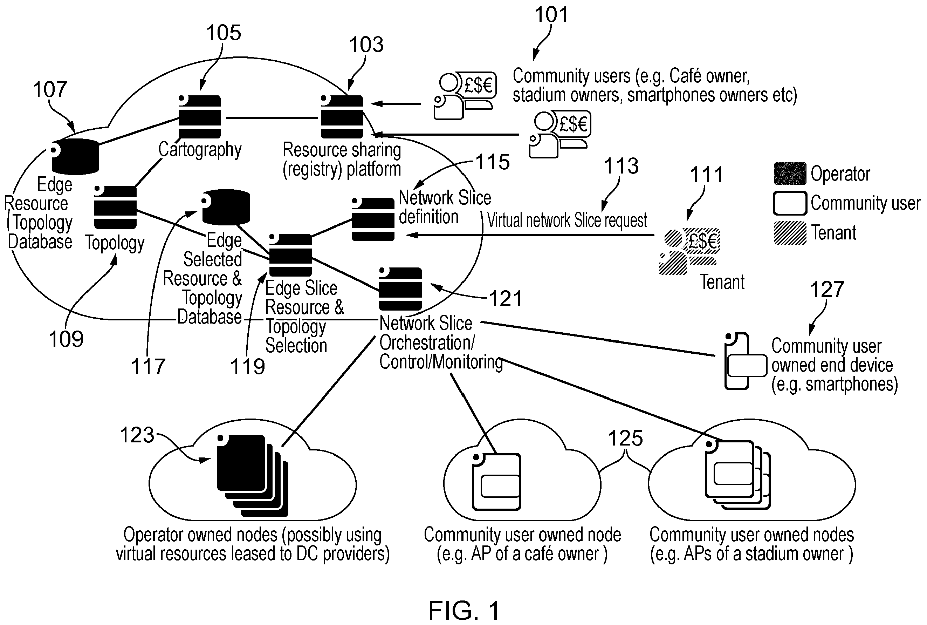

Figure 1 is a schematic representation of a system according to an example. One or more community users 101 can register their community edge resources using a resource sharing registry or platform 103. From a set of resources that have been registered a map of resources can be generated using a cartography engine 105. This can be used to generate a logical map of resources depicting their relative positions and connections in a network, and can also include data representing, for example, the latency between resources. Resources can be nodes in a map, and latency can be represented using edge weights between nodes.

The edge resource topology database (ERTD) 107 is used to store topologies 109 associated with multiple resources. For example, resources may be categorised according to various parameters such as resource type, owner or location for example, and a topology can be generated on the basis of selected one or more parameters. For example, a topology of edge resources can be generated for all resources in a particular location and/or with a certain latency capability.

An edge selected resource and topology database 117 can be used to store data representing a set of multiple resource topologies representing predefined resource sets. For example, the database can be used to store multiple resource topology templates relating to predefined situations. For example, a template may exist for online gaming, which may include a set of selected resources that are capable of fulfilling the demands associated with such a request. Relating to the above-noted example, another template can be provided for video streaming.
In this connection, a set of resources may be selected that enable high bandwidth and low latency data streaming. The template may be further refined by location. For example, a template may be provided that is suitable for a purpose within a given location, such as a location that covers a sporting arena or a particular building or region and so on.

Based on definition 115 a template 119 can be selected and provided to an orchestration entity 121 to enable a logical network slice to be instantiated to accommodate the request 113. As noted above, the selected resources forming a template that enable the network slice can be selected from available resources including operator owned resources (nodes) 123, community owned resources (nodes) 125 and community user owned end point devices 127, such as smartphones and so on.

A tenant 111 can provide a service request 113 resulting in a network slice definition 115. That is, a request 113 for a service can spawn a desired logical network slice, which can be a network slice that is required for a particular purpose, such as those described above for example. The request 113 can be used to parameterise the network slice definition 115 in order to enable a set of resources to be selected. For example, a request 113 can be for a service to provide video streaming in a desired region. Accordingly, the request can parameterise the definition 115 to indicate that resources with high bandwidth and low latency capabilities are required to fulfil the requirements of the request 113.

Thus, a tenant can request a service. Ultimately, a logical network slice can be instantiated to execute the service for the tenant. In order to deliver the slice, a template can be used that relates to a predefined graph of edge non-operator resources that are selected according to a set of parameters that indicate the resources to be suitable for the purposes of executing the service.

The operator defines a network slice template which includes all the required functions that are needed to make the slice function as an end to end network, from RAN to Core to services like IMS and all the network, processing and storage resources. However, according to an example, the air interface resources are brokered by the operator, who determines the location and functional characteristics of the resources in order to be able to position them in a graph that can be used to derive resource topologies for instantiating network slices that execute requested services.

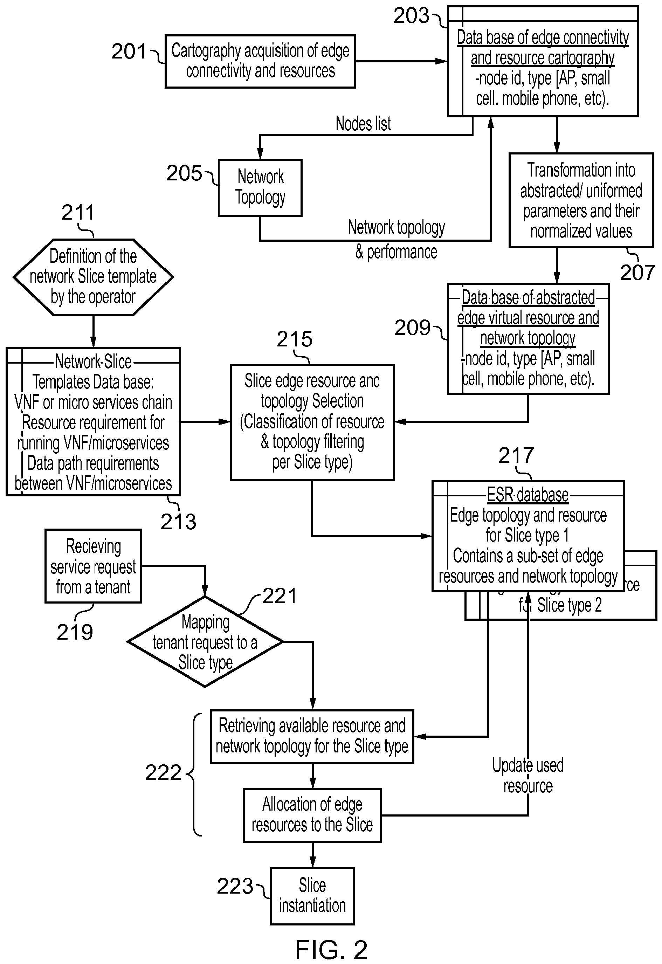

Figure 2 is a flow diagram of a method according to an example. In block 201 non-operator resources are acquired. For example, resources can be provided to a resource sharing registry by resource owners. In an example, the acquisition can include determining the presence and/or capabilities of non-operator and operator resources, such as storage capacities, latency between other nodes, processing capability and so on. A database of the non-operator resources is populated in block 203, which can be used to generate a graph of non-operator resources that specifies the resource itself along with its coverage relationships, performance assessment and so on as noted in more detail below. The database can include data representing a resource (or node) identifier, such as an IP address for example, along with the type of resource. In an example, it is assumed the resource owner has installed a virtual environment and/or has downloaded an operator agent that will bootstrap all the processes further described.

From the list of nodes provided in block 203 a network topography can be generated in block 205, which can include data representing the performance of the network such as the bandwidth and/or latency between respective ones of the nodes in the topology. This information can be stored as part of the database in block 203. In block 207 the capabilities and connectivity parameters of respective ones of the nodes are normalised or abstracted into normalised values, and the resultant normalised data can be stored in block 209 in a database of abstracted edge virtual resources.

In block 211 a network slice template definition can be provided by the operator for storage in a network slice template database 213. In block 215 the abstracted virtual resources are used to select suitable resources for the network slice templates, which can be stored in the ESR database 217. For example, each network slice template can map to selected resources, which may include operator and non-operator resources that are capable of executing a service associated with the template.

In block 219 a request for a service is received from a tenant (or 3^{rd} party). The requested service is mapped to a network slice type in block 221. That is, a request for a service can be mapped to a pre-characterised service by determining a set of one or more parameters characterising the request and mapping those determined one or more parameters to the preselected set of parameters. For example, a request may be for a video streaming service. A pre-characterised service for video streaming may be characterised by parameters requiring a high bandwidth and low latency between network slice nodes. Accordingly, in blocks 222 a network slice generated using resources that fulfils these parameters can be selected to accommodate the requested service and the slice can be instantiated in block 223. The ESR database can be updated as result of the allocation of resources to the slice.

The process of mapping of a service request from a tenant to a network slice template can be an event driven process triggered by the request for creating a slice instance for a tenant. When the tenant requests a service, the network operator can analyse the request and identify (or create if it does not yet exist) the relevant network slice template that fits the service needs of the tenant. For example, a set of multiple resource topologies representing respective network slices using at least the non-operator resources can be provided. In an example, respective topologies including selected non-operator resources suitable for executing a pre-characterised service are characterised by a preselected set of parameters.

Thus a network slice can be selected by determining a topology of resources that will be able to execute the requested service according to maintain, for example, an SLA. The topology of resources can be characterised according to parameters that define the operational characteristics of the topology, such as low latency, high bandwidth, geographical coverage and so on.

If the network slice template does not exist it can be created manually by the network operator on the basis of business discussion with a tenant. This determines the needed functionalities and service requirements. Alternatively the network operator may offer to the tenants a catalogue of available services. The catalogue can expose for a given service some parameters of service to be filled such as coverage area with e.g. GPS coordinates, selected parameters among a small list of predetermined sets such as type of functionality along with their characteristics (e.g. video rate range, storage size, etc). The selection of a set of service requirements among the catalogue is associated with a pre-defined network slice template.

Building a cartography or map of edge connectivity and resource capabilities corresponds to the operation of collecting and creating a map of the edge resource capabilities. Owners of devices who are ready to share part of their device capabilities with others can register their devices/nodes along with their characteristics and information on what the owner authorizes for sharing using the resource sharing registry entity.

Information may be manually registered or gathered automatically using, for example, a network agent to scan nodes in order to determine relative position and capabilities. A graph-based database tool can be used to automatically build a multi-layer network coverage map for the operator with current knowledge of availability, performance, connection cost, reliability and other decision parameters related to the selection of a network node in a Multi-RAT and Multi-Layer network. The map can also include the resources owned by the operator (e.g. WiFi operator AP, small cells, etc) in addition to the "community edge resources". This can be an online automated process that runs continuously so as to collect new inputs or for updating monitored inputs.

Building the network topology of edge nodes or resources: A process can be executed to automatically gather the network topology and the network performance between nodes. It can determine and provide characteristics such as the latency and bandwidth between two nodes. This can be executed periodically or can be triggered when there is a new resource input in the cartography or can be used to update monitored network performance inputs that are triggered when the coverage area for deploying the network slice is selected. Only nodes in the targeted coverage area are then taken into consideration for building the topology. The monitoring of network performance can execute continuously for the purposes of updating.

Abstraction and normalization of edge resource capabilities: An agent can act on the database to transform the heterogeneous sets of resource characteristics into a set of abstracted/uniform parameters and their normalized values. In an example, a data model can be used for the description of abstracted and normalized parameters covering information about the localization, the type of radio access, the radio features, the attached network features, the available throughput in input and in output, the type of device, the sharable capacity of CPU/memory/storage, the type of sharing (fixed amount always available or only when unused by the owner, etc), the persistence of the resource (if the device is on 24/24h, off by night, etc...). The parameters are defined in order to facilitate the tagging of the resource adapted to a type of network slice. From the data model objects, a cartography of all edge network topology and resources nodes is made available to an Edge Slice Resource Selector of the operator. This is a process that runs periodically (over a short time) or is triggered when new input or monitored update is provided into the cartography database.

Selection of edge resources per slice types: an Edge Slice Resource & Topology Selection (ESRS) entity can analyse the network slice templates and identify and select the edge resources that are adapted to the needs of each slice. The function performs classification of edge nodes and their network topology from the dataset of abstracted and normalized edge resources to determine those whose characteristics are compatible with the service needs as described in the network slice template. For example, only nodes (e.g. APs) within the targeted coverage and with significant storage capacity and high throughput will be classified as compatible for a network slice for CDN service (because the network slice template associated to CDN service describes the needs in storage capacity and throughput). In another example only APs with low latency values will be labelled as compatible for a network slice for online gaming. As noted above it feeds the ESR database that contains, for each type of slice (per template), the description of available and suited virtual resources nodes and the related virtual network topology. Note that the database maintains the link between the virtual network infrastructure topology and the physical network infrastructure topology supporting it. This is a process that runs periodically (over a short time for example) or is triggered when new input or update is provided into the cartography database. A monitoring of edge resources usage is performed to maintain the ESR database with updated information on edge resource availability.

Edge resource orchestration API: an entity linked to the ESR database, i.e. the Edge Slice Resource and Topology Selection in figure 1 or the ESR database itself, exposes an API in the form of functions for querying information from the database. The API exposes different topology and resource views depending on the types of slice through access to the ESR database information. The API is used by the slice orchestration entity for getting the edge resource adapted to the slice type..

Slice instantiation by the slice orchestrator of the operator: when the operator wants to instantiate the slice from the identified template, it has to identify first on which edge virtual nodes it can place the micro services and if a virtual network path with all required characteristics exists for connecting the micro services in the chain. It will use the provided above API to get the topology and resource information, to request if enough resources are available and to proceed to the allocation of resources to the network slice. The image of the microservice software is downloaded to the edge node. It is then instantiated as well as network connection between instances of the various microservices are set-up. Once it is done, the instantiation of the slice is done. The service for the tenant is then activated.

From an operator perspective there may be a desire to offload some of traffic to 3rd-party access nodes but the operator needs to make sure end user QoE is as good or better as what would be offered by the "classical" network (which in a way is used as a safety net and for signalling). In an example, knowledge of how a given non-operator resource performs with a given type of traffic from an end-to-end perspective can be determined using crowd-sourced evaluations of resources and there are multiple applications that support the retrieval of such information. In an example, an extension to the HS2.0 ANQP protocol can be used to add information about past performance based on week-day/time of day.

To build a network slice out of non-operator resources, it is necessary to be able to build a network topology (not geographical but from an IP network perspective) and qualify in bandwidth and latency each link between all operator and non-operator-owned neighbouring resources in a small area. An overlay network can be built by agents (there are several solutions: for example, a VPN-based overlay, an SDN-based solution, in a worst case scenario just using the resource local network (but then not mixing between operator-owned and non-operator-owned)). The agent can report both its local IP address and its IP address in the overlay network. The network slicing function can then trigger tests by sending each agent in the local area the list of addresses of neighbouring nodes so as to perform bandwidth and latency tests. The agents can report those measurements that will be stored in the topology database and allow it to build IP topology relationships between nodes.

In parallel to the process above, network slice templates can be defined as noted above. For example, the operator can establish a generic and customizable (by the tenant or operator) network slice template covering all the services that he wants to offer. The network slice template of the operator can indicate in the first filed "Selection of the service type" a description element as "service not proposed". In an example, a list of pre-established but customizable templates for services that the operator decides to offer can be provided.

Generally, the operator knows that the existing template is sufficient because he has built an automatic and customized tool to guarantee that the edge resources selected are appropriate to the wish of the OTT service provider or tenant in terms of service requirements. This is the cartography that collects automatically the mandatory capabilities and resources to be exposed by the identified or declared accesses/devices that a third party wants to rent/share. The capabilities and resources can be defined in term of parameters, information and metrics.

The resource map allows the network operator (slice orchestrator) to automatically select which resources of which identified or declared resources/devices can be used with respect to the following targeted key performance indicators in a non-exhaustive list (that represents in term of quantifying metrics the wish of the tenant):
- Service area definition (geographic zone)
- Minimal radio coverage (%)
- Period of service availability (starting and end hour)
- Targeted system performance (nb of connections, inter-node transfer time ...)
- Virtualization capability
- Minimal amount of total processing & storage
- Quality of Service/Quality of Experience : Targeted Performance Indicators for the service deployed
- Maximal usage cost of shared resource

These key performance indicators are derived by the operators from inputs coming from the capabilities and resources to be exposed and inputs coming from the tenant and then used by the slice orchestrator for selecting the nodes.

The network slice template contains the description of resource in term of needed storage/compute/network resource for the various functions. To take into account specificity of the resource, it contains also information on the time availability for the service (always active, run on day time, etc) because we know that the resources under consideration are volatile and not always on (an owners may switch off his access point at night for example). It contains information of geographical coverage area for the slice. It may contain data relating to an expectation on end user QoE performance (latency, throughput, performance for a given application type). Indeed, the network slice template may express some requirement on any capabilities registered in the database. The network slicing function will classify the nodes according their suitability as resource nodes for hosting functions of various network slices. The classification identifies nodes among the nodes registered in the cartography of edge resource capabilities, which parameters and features meet the requirements from the network slice template. The classification matches the live values of the capabilities of the nodes registered in the database with the values required in the slice template:
- geographical location
- coverage in term of radio range
- amount of shareable storage/compute/network allowed by the node's owner
- persistence of the node (always on, off period time etc)
- network topology parameters: bandwidth and latency performance between nodes
- latency, throughput, performance for a given application type

As a result, each node is tagged as "enabled" for a given network slice. This tag is registered in the database and used to expose the selection of edge resources and topology per slice type through an API to the orchestrator for retrieving the available resource and topology for the slice instantiation.

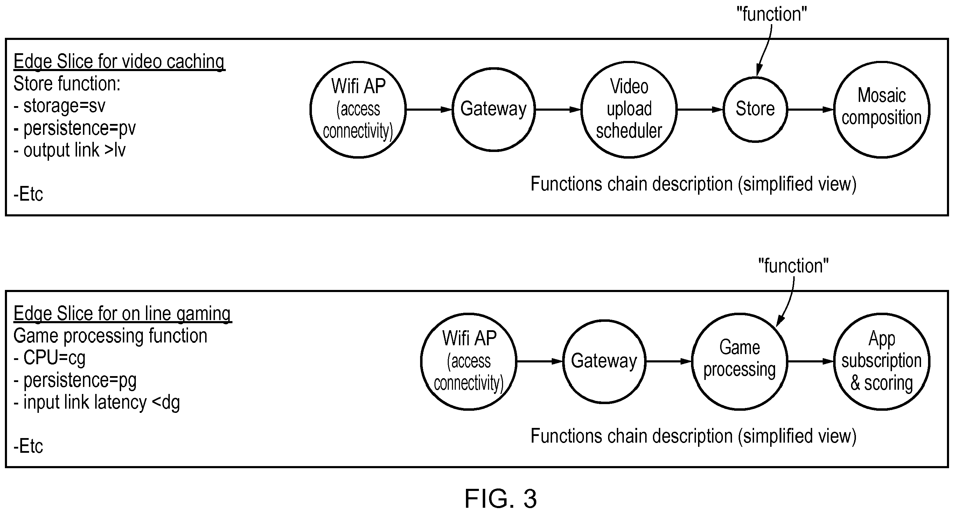

In order to more clearly explain the method and system as provided herein, an example will now be described in more detail with reference to figures 3 to 8. Consider the case where the operator is offering to a tenant two kinds of network slice in a stadium venue. The first one is related to a "video caching" service, whereas the second one is covering an "on line gaming service.

For the two above services, the operator has defined once (manually) some network slice templates with parameters to account for specific customization/requirements from the tenant. The network slice templates describe the chain of micro-services, the required IT resources to run these micro-services as well as the virtual network data path between the micro-services along with their connectivity requirements. It includes the type of resource (e.g. CPU, memory, storage, purpose specific hardware,...), the quantity of resource, the characteristic of the micro-service image. It also indicates some affinity/anti-affinity rules between the micro-services. It also covers the requirement of virtual connectivity links between the micro-services, like throughput, latency, jitter, etc. Each slice template will support a service offer to a tenant.

A simplified example of the two network slice templates is shown in figure 3 (function highlighted). The example covers the case where some virtualized functions or micro-services belong to the application domain (like video upload scheduler, storage, game processing, etc) while some other are from the network domain (like the virtual Wiff Access Point and the virtual GW which holds DHCP and DNS functions).

In the example, consider that the operator is offering to the tenant a catalogue with the two types of service where the tenant can select his specific requirements for the service by filling the desired values among the following characteristics:
Selection of the service type among:
   - Video caching
   - Cloud gaming
Selection of coverage area
   - Selection of a Venue name in a drop down menu or enter GPS coordinates of desired geographical area. In our example, the tenant selects "Stade de France" venue.
Selection of service characteristics:
   When service type = video caching
      - Selection for video storage size among a list of value ranges: video storage size = (0-1; 1-5; 5-10) expressed in Go
      - Selection of uplink bandwidth (from cache to mosaic composition server) among a list of values: (1; 5; 10; 20; 50) expressed in Mbps
      - Selection among a menu list of service persistence over full day time: persistence timetable = (always-on; 8:00-22:00; -6:00-12:00; 12:00-18:00 - 18:00-24:00), time zone = (list of time zone abbreviations)
   When service type = cloud gaming
      - Selection of game processing type among a list such as {intensive; medium; low}
      - Selection of uplink latency (end-to-end from end user device to game processing server) among a list of values: (5; 10; 20; 50) expressed in ms
      - Selection among a menu list of service persistence over full day time: persistence timetable = (always-on; 8:00-22:00; -6:00-12:00; 12:00-18:00 - 18:00-24:00), time zone = (list of time zone abbreviations)

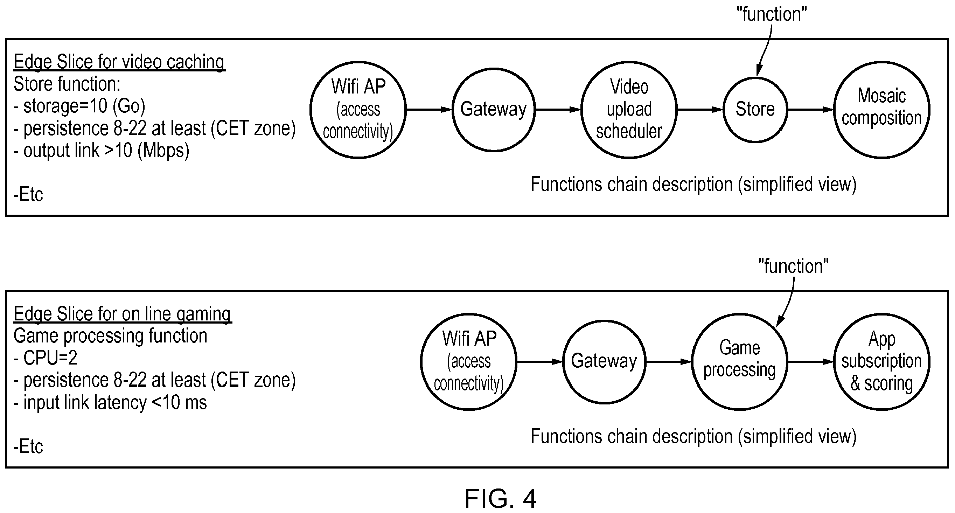

For the two above services, the operator has defined manually some network slice templates with parameters to account for specific customization/requirements from the tenant. The above parameters values are used in the associated network slice templates to take into account the specific requirements from the tenant. We focus on the requirements related to the functions shown in figure 4, in which the selected parameters are noted.

At the slice creation, the two network slice templates are configured with the values for the network slice parameters taken from the previous example of service requirements and presented in figure 4.

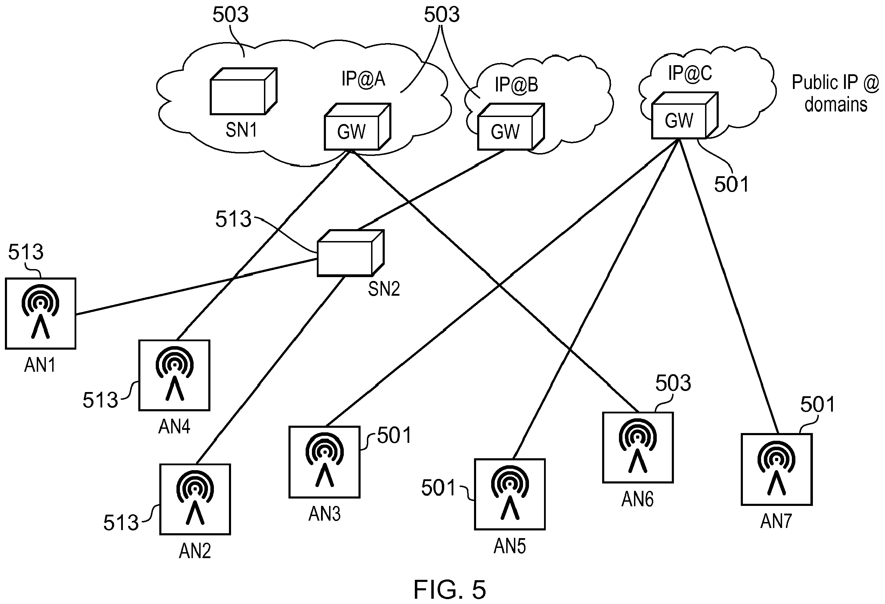

Consider the following physical network topology for illustrative purposes. It handles the following set of nodes owned by some private organizations (501) and by the operator (503), depicted in figure 5.

Each access node is registered by its owner into the platform along with their characteristics and information on what the owner authorizes for sharing. Some nodes are Access Points or Server Nodes with parameters and with children nodes for characteristics and measurements.

In the example of figure 5, 3GPP Access nodes:
- EUTRAN cell 24454913 => node AN4 (persistent, managed by the operator)
- EUTRAN cell 24454926 => node AN6 (persistent, managed by the operator)

Wi-Fi Location and access nodes:
- AP SSID Stade de France zone A=> node AN3 (persistent, not managed by the operator)
- AP SSID Stade de France zone B => node AN5(temporary, not managed by the operator)
- AP SSID Stade de France zone C=> node AN5 (persistent, not managed by the operator)
- AP SSID Stade de France Orange => node AN I, AN2 (persistent, managed by the operator)

Server nodes:
- Server Orange I, url O1=> node SN1 (persistent, managed by the operator)
- Server Orange 2, url O2=> node SN2 (persistent, managed by the operator)

Parameters and characteristics of each node are then registered in the cartography database:
- Total CPU capacity (number of cores)
- Total Storage capacity (in Go)
- Persistence of the node (24/24, etc)
- Access connectivity type (3GPP, WiFI,...)
- Access BW
- Access latency
- Physical topology information: @IP, port,...

Note that when a node is registered for sharing some storage or processing capacities, the registry process automatically triggers the download of an agent in charge of installing the virtualization environment (like a hypervisor) in the node/resource.

A second process takes place to build the abstracted virtual network topology. An automatic process can be run to build an IP overlay network of all edge nodes and an agent downloaded into each node measures network performance such as bandwidth and latency from one node to another one. All this information can be automatically reported into the cartography database. Note that optionally, for process optimization purpose, only the nodes belonging to the identified coverage area (in our example, the "stade de France") may be taken into consideration for building the network topology.

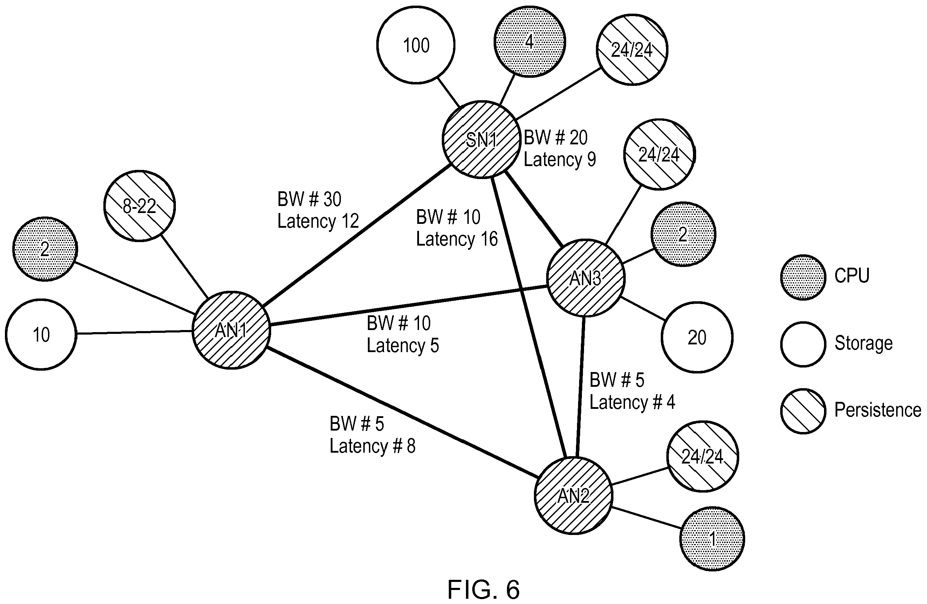

Abstraction and normalization of edge resource capabilities: A first treatment is applied on the previous database values of parameters and characteristics in order to homogenize the inputs of the cartography of edge capabilities. For example CPU, storage indication, persistence are converted in such a way that they are expressed in the same format or unit (e.g. number of core for CPU, Mb for storage, persistence over hours period), resulting example is presented in figure 6.

In this example, the following characteristics are considered for the edge slice resource:
- Shared CPU amount, expressed in core units
- Shared storage amount, expressed in Gb
- Persistence of the node: 24/24 , time on - time off, expressed in hour & timezone
- Link latency, expressed in ms
- BW link, expressed in Mbps

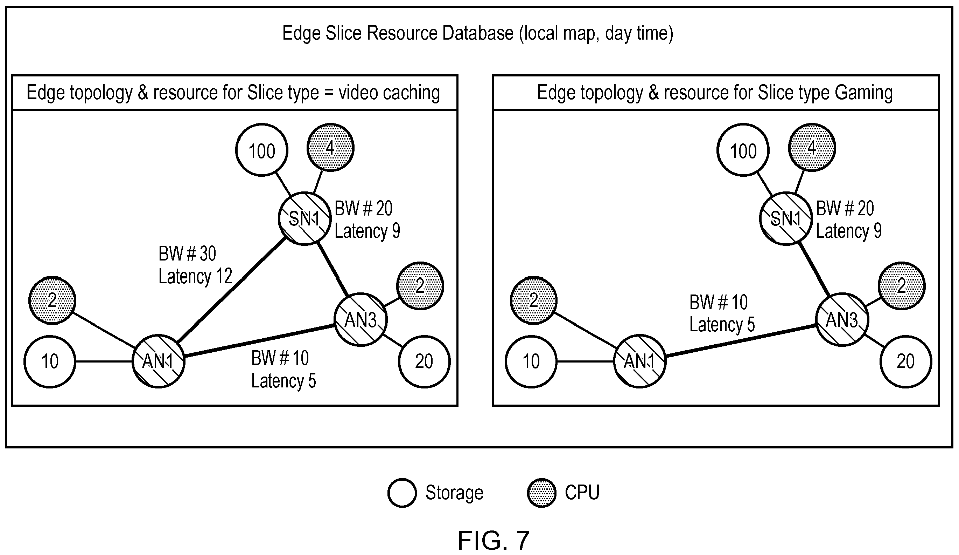

The mapping between the network slice template and the available virtual resource offered by the cartography of edge resource capabilities is realized to build the edge slice resource database, as presented in figure 7. An automated process selects a subset of access and server nodes among the nodes registered in the cartography of edge resource capabilities, which parameters and features meet the service requirements. The subset of nodes selected and their parameters and features are included in the database. This data base is periodically updated over the time as some nodes are not persistently available and as CPU/memory/storage are shared resource dynamically varying over time.

In this example, for the slice type "video caching" on the left side of figure 7, the access node AN2 is not selected as relevant resource for the slice since it has no storage to be shared. For the slice type "online gaming" on the right side of figure 7, the access node AN2 is removed as it has not enough amount of available CPU and the link between AN1 and SN1 is also removed because of its high latency.

Edge resource orchestration API: In this example the ESR database exposes an API in the form of functions for querying information from the database. Some examples of such functions can be:
- ListNodes(NodeType, Service) that can retrieve from the ESR Database all nodes of a certain type matching the specified service (in our example, the specified service is either video caching or gaming). One way to call this function would be:
   ListNodes(Access_Node, gaming) and that will return the list of all Access_nodes that are capable to serve as gaming link.
- GetPaths(NodeStart, NodeEnd, ServiceName) : find possible paths (series of linked nodes) matching the specified service
- GetTemplate(ServiceName) : returns the components associated to a given template
- These functions are automatically called by the orchestration process in order to select nodes associated to a specific service.

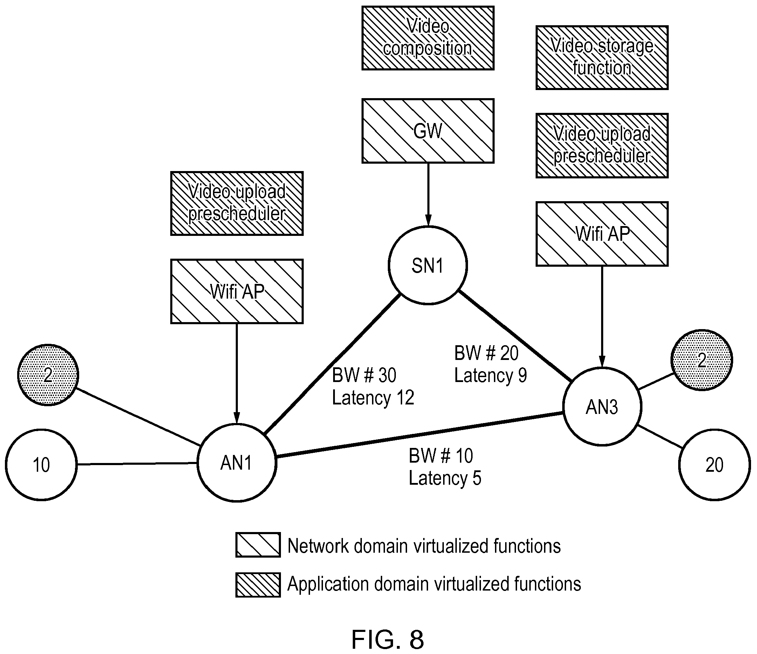

Slice instantiation by the slice orchestrator of the operator: On the request from the tenant to instantiate the service "video caching @ Stade de France", the operator will process as follows (see figure 6):
- From ESR database, it gets the available edge topology and resource for the slice type = video caching at Stade de France.
- It applies an algorithm like integer linear programming to determine the placement of the functions of the chain onto the available resource for the network slice. As depicted in figure 8, as a result, the virtualized "WiFi AP", "video composition", "video storage" and "video upload scheduler" function are placed onto AN3. Virtualized "WiFI AP" and "video upload scheduler" functions are also placed onto AN1. The virtualized "GW" function is placed onto SN1 node.
- It will instantiate these functions on the selected nodes, and interconnect them
- This instantiates the edge network slice "video caching @Stade de France".

The benefit of the method and system as described herein is therefore to provide an operator with an automated solution to dynamically create a network slice from edge resources including those that are made available by individuals or small entity/organizations and are not part of the network operator domain. It also provides a means to expose selected views/map of those heterogeneous edge resources that are matching the need of the network slice. This provides programmability for the network slice orchestration by the operator.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for instantiating a logical network slice for use with an operator-maintained network portion, the method comprising:
generating a graph of non-operator resources;
generating a set of multiple resource topologies representing respective network slices using at least the non-operator resources, respective topologies including selected non-operator resources suitable for executing a pre-characterised service **characterised by** a preselected set of parameters;
receiving a request for a service;
selecting a resource topology from the set for the requested service; and
instantiating the requested service using a network slice.

2. A method as claimed in claim 1, further comprising:
determining or otherwise providing the capabilities and connectivity parameters of respective ones of the non-operator resources; and
normalising the capabilities and connectivity parameters of respective ones of the non-operator resources.

3. A method as claimed in claim 1 or 2, further comprising:
determining a measure of performance between respective ones of the non-operator resources.

4. A method as claimed in any preceding claim, further comprising:
defining or providing a set of logical network slice templates, respective ones of the templates mapping to a pre-characterised service.

5. A method as claimed in any preceding claim, further comprising:
mapping a request for a service to a pre-characterised service by determining a set of one or more parameters characterising the request and mapping those determined one or more parameters to the preselected set of parameters.

6. A method as claimed in any preceding claim, further comprising:
generating a map of non-operator resources;
updating the map to reflect the addition or removal of one or more non-operator resources.

7. A system for instantiating a logical network slice for use with an operator-maintained network portion, the system comprising:
a resource sharing registry entity to receive data representing operator brokered resources;
an edge resource topology database to generate a set of multiple resource topologies using at least the non-operator resources, respective topologies including selected non-operator resources suitable for executing a pre-characterised service **characterised by** a preselected set of parameters;
the system operable to receive a request for a service;
select a resource topology representing a network slice from the set for the requested service; and
instantiate the network slice using a network slice orchestration entity.

8. A system as claimed in claim 7, wherein the resource sharing registry entity is operable to determine or otherwise receive data representing the capabilities and connectivity parameters of respective ones of the non-operator resources; and
normalise the capabilities and connectivity parameters of respective ones of the non-operator resources.

9. A system as claimed in claim 7 or 8, wherein the system is operable to determine a measure of performance between respective ones of the non-operator resources.

10. A system as claimed in any of claims 7 to 9, wherein the system is operable to map a request for a service to a pre-characterised service by determining a set of one or more parameters characterising the request and mapping those determined one or more parameters to the preselected set of parameters.

11. A system as claimed in any of claims 7 to 10, wherein the system is operable to generate a map or graph of non-operator resources and update the map to reflect the addition or removal of one or more non-operator resources.

12. A computer program product, comprising a computer usable medium having computer readable program code embodied therein, said computer readable program code adapted to be executed to implement a method to instantiating a logical network slice for use with an operator-maintained network portion as provided in any one of claims 1 to 6.

13. A product as claimed in claim 12, further including program code embodied thereon to be executed to determine the capabilities and connectivity parameters of respective ones of the non-operator resources and normalise the capabilities and connectivity parameters of respective ones of the non-operator resources.

14. A product as claimed in claim 12 or 13, further including program code embodied thereon to determine a measure of performance between respective ones of the non-operator resources.

15. A product as claimed in any one of claims 12 to 14, further including program code embodied thereon to be executed to map a request for a network slice to a pre-characterised service by determining a set of one or more parameters characterising the request and mapping those determined one or more parameters to the preselected set of parameters.
